# EUROPEAN PATENT APPLICATION

(11) **EP 4 349 149 A1**
(43) Date of publication of application: **10.04.2024**
(21) Application number: 22811720.6
(22) Date of filing: 19.05.2022
(51) Int. Cl.: A01C 7/16, A01C 7/06

(54) **METHOD AND DEVICE FOR CREATING A POLYSYSTEM FOR MIXING SEEDS AND FERTILIZERS**

(30) Priority: 24.05.2021 RU 2021114617
(71) Applicant: Obschestvo S Ogranichennoi Otvetstvennostyu "Artexim" (OOO "Artexim"), Yerevan, 0033 (AM)
(72) Inventor: NALBANDYAN, Armen Vemirovich, Rostov-on-Don, 344092 (RU)
(74) Representative: Osmans, Voldemars
(86) International application number: PCT/RU2022/000167
(87) International publication number: WO 2022/250570

(57) **Abstract**

The invention relates to the field of preparing for agricultural work, particularly to auxiliary operations preceding sowing or soil fertilization. Method of creating a polysystem for mixing seeds and fertilizers is as follows: initially, seeds of different plant species are placed in a mobile container with at least one partition wall, dividing it into at least two compartments, in such a way that each mentioned compartment contains a one specific type of seeds, either different fertilizers are placed in separate compartments within the aforementioned mobile container, ensuring that each compartment contains a one specific type of fertilizer, either seeds and fertilizers are placed in separate compartments within the mentioned container, ensuring that the seeds and fertilizers are in different compartments. The proposed invention provides is the creating of a polysystem for mixing seeds and/or fertilizers, reducing the time required for preparation for sowing and/or applying fertilizers to the soil, enhancing the functional capabilities during the preparation and implementation of various agricultural operations.

## Description

### TECHNICAL FIELD

The invention relates to the field of preparing for agricultural work, particularly to auxiliary operations preceding sowing or soil fertilization.

### BACKGROUND ART

Currently, methods are known for preparing for agricultural work, in which, prior to sowing or soil fertilization, the type of fertilizer needed for the soil or the seeds required for sowing are determined. These fertilizers or seeds are then transported to the site of agricultural work, followed by the commencement of fertilization or seed sowing.

Such methods are convenient but have several drawbacks. The most effective soil fertilization occurs when using mixtures of different fertilizers. When sowing seeds, there is often a need to use several types of seeds simultaneously, and after sowing or during the sowing process, there is also a need to fertilize the soil. However, it is impossible to mix seeds and fertilizers in the required proportions directly on farms due to the lack of corresponding technologies. Consequently, seeds are applied separately, leading to increased resource costs (labor, machinery, fuel), while fertilizers are applied separately, resulting in similar problems as described earlier, or in the form of ready-made mixtures - so-called 'complex fertilizers,' where the proportions of the mixture components are standardized and may significantly differ from the proportions required for specific fields or field sections according to soil analysis results. All of these factors lead to unjustified cost increases and elongation of agricultural deadlines, the disruption of which negatively affects the quality and quantity of future crops.

The task set by the developer of the method and device for creating a polysystem for mixing seeds and fertilizers is to develop a method and device that would allow for the automation of mixing different types of seeds and fertilizers, reducing the time required for sowing and/or applying fertilizers to the soil.

The technical result of the claimed method and device for creating a polysystem for mixing seeds and fertilizers is the creating of a polysystem for mixing seeds and/or fertilizers, reducing the time required for preparation for sowing and/or applying fertilizers to the soil, enhancing the functional capabilities during the preparation and implementation of various agricultural operations.

### DISCLOSURE OF INVENTION

The essence of the method for creating a polysystem for mixing seeds and fertilizers is as follows.

Initially, seeds of different plant species are placed in a mobile container with at least one partition wall, dividing it into at least two compartments, in such a way that each mentioned compartment contains a one specific type of seeds, either different fertilizers are placed in separate compartments within the aforementioned mobile container, ensuring that each compartment contains a one specific type of fertilizer, either seeds and fertilizers are placed in separate compartments within the mentioned container, ensuring that the seeds and fertilizers are in different compartments.

Then the aforementioned mobile container with at least one partition wall is transported to the site of agricultural activities.

Afterward, using adjustable-closing holes located at the bottom of each of the aforementioned compartments, regulating the gap formed by said adjustable-closing holes, the contents of at least two of the aforementioned compartments are gradually moved simultaneously into a functioning auger positioned below the aforementioned adjustable-closing holes.

Further, using at least one auger, the contents of at least two mobile containers are transported to the destination, simultaneously mixing this content in the required proportions during the transfer, as specified by the aforementioned adjustable gap.

Depending on the type of seeds and/or fertilizers, adjustments can be made to the adjustable gaps formed by the aforementioned adjustable-closing holes, enabling each gap to transport a specific volume of seeds or fertilizers per unit of time into the operating auger.

The essence of the device for creating a polysystem for mixing seeds and fertilizers lies in the fact that the device comprises:
a container with at least one partition wall dividing the mentioned container into at least two compartments,
adjustable-closing holes with the possibility of regulating the gap formed by these holes, located at the bottom of each of the aforementioned at least two compartments,
at least one auger positioned below the aforementioned adjustable-closing holes,
at least one power source delivering torque to the auger upon a respective command from the control system,
a control system.

The device may also additionally include at least one loading hopper and at least one transferring mechanism that moves seeds or fertilizers from the loading hopper into at least one of the aforementioned compartments formed by the mentioned partition wall.

### BRIEF DESCRIPTION OF DRAWINGS

The claimed invention is illustrated graphically as follows:

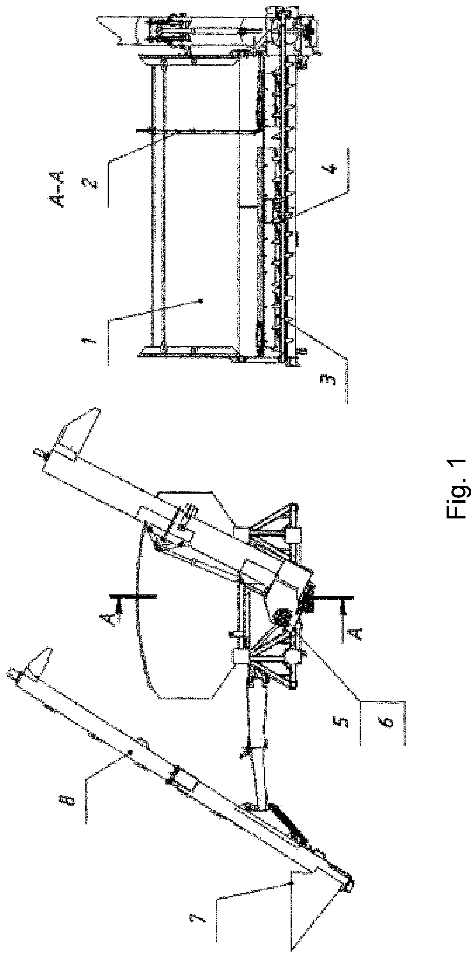

In Fig. 1 - an agricultural preparation device.
1 - Container;
2 - Partition wall;
3 - Adjustable-closing holes;
4 - Auger;
5 - Motor or power take-off shaft;
6 - Control system;
7 - Loading hopper;
8 - Auger transferring seeds or fertilizers from the loading hopper to compartments formed by the partition wall.

### MODE FOR CARRYING OUT THE INVENTION

The claimed method for creating a polysystem for mixing seeds and fertilizers is as follows. To implement the method, initially, seeds of various plant species are placed in a mobile container with at least one partition wall dividing it into at least two compartments, in such a way that each mentioned compartment contains a one specific type of seeds, either different fertilizers are placed in separate compartments within the mentioned mobile container, ensuring that each compartment contains a one specific type of fertilizer, either seeds and fertilizers are placed in separate compartments within the mentioned container, ensuring that the seeds and fertilizers are in different compartments.

In the context of this patent application, a mobile container refers to a receptacle designed for swift spatial movement. Such mobility can be achieved through wheels located on the external side of the lower part of the container, enabling attachment to towing or power means such as tractors or automobiles, either the container may possess its own power source for spatial movement, for instance, an internal combustion engine. Examples of a mobile container include various types of automotive or tractor trailers, as well as freight trucks. Within such a mobile container, essential for implementing the invention, there should be at least one partition wall dividing the container into at least two compartments to enable the separate placement of various seeds and/or fertilizers without mixing them inside these compartments. Multiple such partition walls can be present.

The more partition walls there are, and consequently, the more isolated compartments formed within, the greater the variety of different seeds and/or fertilizers that can be utilized in implementing the described invention. At least two compartments among the total number of compartments separated by the partition wall should contain different contents. For instance, one compartment may contain wheat seeds, while another may contain barley seeds, or one compartment may hold nitrogen fertilizers while another holds potassium fertilizers, either one compartment may contain seeds while another holds fertilizers. Additionally, multiple compartments can contain the same content, provided that at least one of the compartments has different contents.

After placing seeds or fertilizers into the aforementioned compartments, which are part of the mobile container, the said mobile container with at least one partition wall is moved to the location for agricultural activities. For instance, if the mobile container is a trailer-mounted hopper-loader, it can arrive at the field loaded with various contents or move across the field, depending on the chosen method of delivery to the unloading site, such as to a seeding unit or a fertilizer application unit.

Subsequently, by using adjustable-closing holes located at the bottom of each of the aforementioned compartments, regulating the gap formed by these adjustable-closing holes, the contents of at least two of the mentioned compartments are gradually transferred simultaneously into a working transferring mechanism positioned below the mentioned adjustable-closing holes. The adjustable-closing holes at the bottom of each formed compartment are arranged to facilitate the movement of the contents of the compartments into the operating transferring mechanism under the force of gravity. Blinds or any other mechanisms known in the art can be used as mechanisms to regulate the closing of the holes. As for the transferring mechanism, it could involve, for instance, an auger, conveyor, or any other known transferring mechanism.

Subsequently, using at least one auger, the contents from at least two mobile compartments are moved to the designated location, simultaneously blending the contents during the transfer in the required proportions as set by the aforementioned adjustable gap. For instance, if there is a need to sow rice seeds using nitrogen fertilizers, the openings of the container containing rice seeds and the container with nitrogen fertilizers are opened, adjusting, if necessary, the size of the gap regulated by the mechanism controlling the closure of the openings to control the mixing ratios. Seeds and fertilizers, driven by gravity, move into the operating auger, which mixes the seeds with fertilizers during their transfer. The blended contents of the containers can be moved, for example, into seeders for further seed sowing.

Depending on the type of seeds and/or fertilizers, adjustments can also be made to the adjustable gaps formed by the aforementioned adjustable-closing holes so that each gap allows a specific volume of seeds or fertilizers to be moved per unit of time into the operating auger. Because different contents placed in the containers possess different properties, adjusting the size of the gap regulated by the closing mechanism is necessary to enhance the accuracy of proportions during mixing, taking into account the specific properties of each content.

The device for creating a multi-system of seed and fertilizer mixing consists of: a container with at least one separating wall dividing the aforementioned container into at least two compartments, adjustable-closing holes with the ability to regulate the gap formed by these holes, with the mentioned holes located at the bottom of each of the aforementioned at least two compartments, at least one auger positioned below the aforementioned adjustable-closing holes, a control system, at least one power source transmitting torque or force according to the control system's command. Such power sources can include electric motors, hydraulic motors, power take-off mechanisms from tractors, internal combustion engines.

For a specialist in this technical field, it is also evident that transmission mechanisms are necessary to transmit torque. For instance, these transmissions could include: belt drives, gear transmissions, drive shafts, etc. These mechanisms are well-known in the field of technology and do not require detailed description.

The device for creating a polysystem of seed and fertilizer mixing can additionally include at least one loading hopper and at least one transferring mechanism that moves seeds or fertilizers from at least one loading hopper into at least one of the aforementioned compartments formed by the mentioned partition wall. Such a solution is implemented to establish an autonomous system for loading seeds and fertilizers into containers.

The examples provided in the description cannot limit the invention and are only intended for a general understanding of the invention.

### INDUSTRIAL APPLICABILITY

By performing operations involving the movement of container contents and simultaneous mixing, time is saved in preparing for seeding and/or applying fertilizers to the soil. Enhancement of functional capabilities is achieved by the ability to utilize a single piece of machinery, for instance, a trailer-mounted hopper-loader, to obtain various mixes of seeds and fertilizers stored within the containers of this hopper.

The invention also enables the preparation of various mixtures for different fields or different sections of one field using a single unit of machinery, in accordance with the soil biochemical analysis map and agronomists' recommendations. This is achieved without the forced use of ready-made 'Complex fertilizers' that cannot account for the differentiated fertilizer application requirements or the necessity of passing the seeding apparatus or fertilizer application devices multiple times on the same fields/field sections, thereby not only doubling or more the costs but also posing a risk of elongating the agricultural terms and increasing soil compaction due to the double impact of the tractor and trailer equipment.

## Claims

1. A method of creating a polysystem for mixing seeds and fertilizers, in which, initially, seeds of different plants are placed in a mobile container, which has at least one dividing wall that separates it into at least two compartments, in such a way that each mentioned compartment contains a one specific type of seeds,
either different types of fertilizers are placed separately in each mentioned compartment to contain a one specific type of fertilizer, either seeds and fertilizers are placed so that seeds and fertilizers are in separate mentioned compartments,
then the aforementioned mobile container, with at least one dividing wall, is moved to the location of agricultural work,
after that, using adjustable-closing holes located at the bottom of each of the mentioned compartments, by adjusting a gap formed by said adjustable-closing holes, the content of at least two of the mentioned compartments is gradually moved into a working auger situated below the aforementioned adjustable-closing holes,
further, using at least one auger, the content from at least two mobile compartments is moved to the destination, simultaneously blending the content during transportation in the required proportions as set by the aforementioned adjustable gap.

2. The method of creating a polysystem for mixing seeds and fertilizers, according to claim 1, wherein, depending on the type of seeds and/or fertilizers, adjustments are made to the adjustable gaps formed by the aforementioned adjustable-closing holes so that each gap allows the movement of a specific volume of seeds or fertilizers per unit of time into the working auger.

3. A device for creating a polysystem for mixing seeds and fertilizers comprising:
a container having at least one partition wall that divides the aforementioned container into at least two compartments,
adjustable-closing holes with the ability to regulate a gap formed by these holes, wherein the aforementioned holes are located at the bottom part of each of the aforementioned at least two compartments,
at least one auger, located beneath the aforementioned adjustable-closing holes,
at least one energy source transmitting torque to the auger upon the respective command from a control system,
the control system.

4. The device for creating a polysystem seed and fertilizer mixing system, based on claim 3, wherein in that the device additionally comprises:
at least one loading hopper,
at least one auger that moves seeds or fertilizers from at least one loading hopper into at least one of the aforementioned compartments formed by the aforementioned dividing wall.
